# EUROPEAN PATENT APPLICATION

(11) **EP 4 464 456 A2**
(43) Date of publication of application: **20.11.2024**
(21) Application number: 24205195.1
(22) Date of filing: 08.12.2020
(51) Int. Cl.: B23Q 1/48

(54) **MACHINE TOOLS AND METHODS OF OPERATION THEREOF**

(30) Priority: 10.12.2019 GB 201918112
(62) Divisional of application: 20825221.3
(71) Applicant: Fives Landis Limited, Keighley, Yorkshire BD20 7SD (GB)
(72) Inventor: Tucker, Matthew, Bedford, MK42 7JE (GB)
(74) Representative: Sharrock, Daniel John

(57) **Abstract**

A machine tool comprises first and second rotary machine axes (10,16) which are parallel and mounted on a base in fixed locations relative to the base, a linear machine axis (8) which is carried by the first rotary machine axis, and a rotary positioning mechanism (30) which is carried by the linear machine axis, wherein the rotary positioning mechanism provides rotation about a support rotational reference axis (32) that is parallel to the first and second rotary machine axes. A further machine tool includes a linear positioning mechanism (40) which is carried by the linear machine axis that provides linear movement parallel to the linear machine axis. The rotary and/or linear positioning mechanisms enable the workzone of the machine tool to be extended and/or reconfigured.

## Description

### Field of the Disclosure

The present disclosure relates to machine tools such as grinding machines for example and methods of operation thereof.

### Background to the Disclosure

A family of machine tools has been developed by the applicant which involves provision of two rotary machine axes mounted on a machine base in fixed locations with their axes of rotation parallel and spaced apart. Such machines are described for example in GB-A-2456843, GB-A-2476468 and EP-A-2684640. These machines are able to machine (by grinding, turning or polishing for example) a variety of workpiece shapes. In some implementations, a linear machine axis is mounted on one of the rotary axes. A tool or workpiece mounted on the linear axis is brought into contact with a workpiece or tool mounted on the other rotary axis.

### Summary of the Disclosure

The present invention provides a machine tool comprising:
a machine base having a machine reference plane;
first and second rotary machine axes which are mounted on the base in non-adjustable locations relative to the base, and have respective first and second rotational reference axes that are parallel, spaced apart and perpendicular to the machine reference plane;
a linear machine axis which is carried by the first rotary machine axis, wherein the linear machine axis has a linear drive reference axis that is parallel to the machine reference plane; and
a rotary positioning mechanism which is carried by the linear machine axis and includes a rotatable support and a rotary positioning mechanism base, wherein the rotatable support is rotatable relative to the rotary positioning mechanism base about a support rotational reference axis that is parallel to the first and second rotational reference axes.

In this way, the versatility of a machine tool having the known configuration of two rotary and one linear machine axes (and preferably only those machine axes) can be significantly increased.

In preferred examples, the machine tool includes a linear positioning mechanism which is carried by the linear machine axis and includes a slideable support and a linear positioning mechanism base, wherein the slideable support is slideable relative to the linear positioning mechanism base along a linear slide reference axis that is parallel to the linear drive reference axis, and the rotary positioning mechanism is carried by the slideable support.

The present disclosure further provides a machine tool comprising:
a machine base having a machine reference plane;
first and second rotary machine axes which are mounted on the base in non-adjustable locations relative to the base, and have respective first and second rotational reference axes that are parallel, spaced apart and perpendicular to the machine reference plane;
a linear machine axis which is carried by the first rotary machine axis, wherein the linear machine axis has a linear drive reference axis that is parallel to the machine reference plane; and
a linear positioning mechanism which is carried by the linear machine axis and includes a slideable support and a linear positioning mechanism base, wherein the slideable support is slideable relative to the linear positioning mechanism base along a linear slide reference axis that is parallel to the linear drive reference axis.

The addition of rotary and/or linear positioning mechanisms enables the workzone of the machine to be extended and/or reconfigured to enhance the capabilities of the machine. For example, this may assist with machining of high surface quality and high accuracy workpieces including, but not limited to, partial hemispheres, spherical and aspheric bores, and thin section bearing raceways and their location diameters. Examples of machine tools described herein may facilitate machining of hyper-hemispherical surfaces by extending the capabilities of the machine tools.

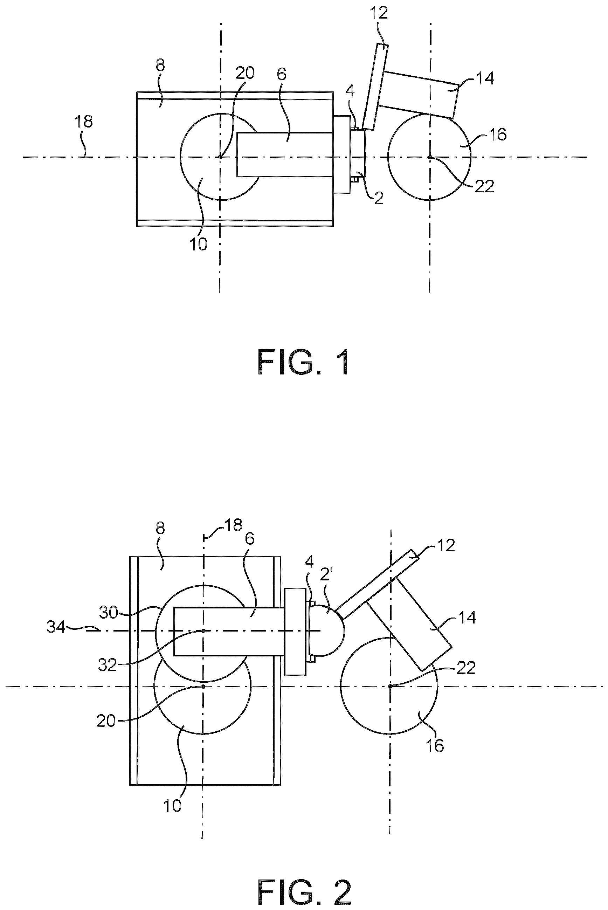

In the existing machine configurations discussed above involving two rotary and one linear machine axes, the linear axis has a relatively short stroke (around 100 to 200mm). This has been found to limit the range of the machining capabilities. A machine configuration of this form is depicted in Figure 1. A cylindrical workpiece 2 is held in a chuck 4 mounted on a workpiece spindle 6. The workpiece spindle 6 is arranged to rotate the workpiece 2 about an axis 18 which is parallel with the direction of motion of a short stroke linear machine axis 8 which is mounted on a first vertical rotary machine axis 10. A peripheral grinding wheel 12 is mounted on a tool spindle 14 that is carried by a second vertical rotary machine axis 16. Using such a configuration, tapers or spherical or aspherical surfaces may be machined on the workpiece. However, the extent of those surfaces will be limited by the size of the workzone available using such configurations. The workzone of such a machine can be substantially extended according to examples of the present disclosure.

In examples including a rotary positioning mechanism, machine tools according to the present disclosure may include a drive spindle which is carried by the rotatable support, has a mount for receiving a tool or a workpiece and is operable to rotate the mount about a spindle reference axis which is parallel to the machine reference plane and non-parallel to the linear drive reference axis. In some implementations, the spindle reference axis is perpendicular to the linear drive reference axis.

The rotatable support may be manually rotatable relative to the rotary positioning mechanism base and includes a locking mechanism for selectively locking the position of the rotatable support relative to the rotary positioning mechanism base. In examples including a linear positioning mechanism, the slideable support may be manually slideable relative to the linear positioning mechanism base and include a locking mechanism for selectively locking the position of the slideable support relative to the linear positioning mechanism base. A manually adjustable element may be positioned by a machine operator or machine setter prior to use. The support may be adjusted and then manually locked in the selected position.

In examples including a rotary positioning mechanism, the mechanism may include a rotary drive for rotating the rotatable support relative to the rotary positioning mechanism base. In examples including a linear positioning mechanism, the mechanism may include a linear drive for moving the slideable support relative to the linear positioning mechanism base.

A positioning mechanism may include an actuator which may be electrically, hydraulically or pneumatically driven for example. The actuator may be operated by a control arrangement of the machine tool (such as a computer numerical control system (CNC)).

A positioning mechanism may facilitate selection of predefined locations. For example, it may define two or more indexed or indented locations.

A positioning mechanism may comprise a driven machine axis, which preferably includes a servo drive. The driven machine axis may be operated by a control arrangement of the machine tool.

A tool mount for a tool, probe or gauge may be carried by one of the first and second rotary machine axes and a workpiece mount for receiving a workpiece may be carried by the other. A control arrangement of the machine tool may be configured to control the relative orientations and positions of the tool and workpiece mounts during a machining operation using the linear, first rotary and/or second rotary machine axes.

The present disclosure further provides a method of machining a workpiece with a machine tool as described herein, wherein the method comprises the steps of
mounting a workpiece on a workpiece mount carried by the rotatable support or the slideable support;
mounting a tool on a tool mount carried by the second rotary machine axis;
bringing the workpiece and tool into contact; and
machining the workpiece by feeding the workpiece towards the tool using only the linear machine axis.

In some implementations, the machining step may include rotating the workpiece about a spindle reference axis which is parallel to the machine reference plane and non-parallel to the linear drive reference axis. For example, the spindle reference axis may be perpendicular to the linear drive reference axis.

The present disclosure may also provide a method of machining a workpiece with a machine tool as described herein, the method comprising the steps of:
mounting a workpiece on a workpiece mount carried by the rotatable support or the slideable support;
mounting a tool on a tool mount carried by the second rotary machine axis;
bringing the workpiece and tool into contact; and
machining the workpiece by moving the workpiece relative to the tool using only the linear machine axis and the first and second rotary machine axes.

In examples of such a method, the tool may be moved relative to the workpiece in a direction perpendicular to the linear drive reference axis.

### Brief Description of the Drawings

A known machine tool and examples of the present disclosure will now be described with reference to the accompanying schematic drawings, wherein:
Figure 1 is a plan view of a known machine tool configuration;
Figure 2 is a plan view of a machine tool configuration according to an example of the present disclosure;
Figure 3 is a perspective view of a rotary machine axis assembly of a machine tool according to an example of the present disclosure;
Figure 4 is a plan view of a further example of a machine tool configuration according to the present disclosure;
Figure 5 is another perspective view of a rotary machine axis assembly from a machine tool according to an example of the present disclosure;
Figure 6 is a perspective sectional view of a thin race bearing; and
Figures 7 to 10 are plan view of examples of machine tool configurations according to the present disclosure to illustrate grinding of a ring bearing.

### Detailed Description of the Drawings

An example of a machine tool modified in accordance with the present disclosure is shown in Figure 2. It includes a rotary positioning mechanism 30 which is carried by the linear machine axis 8. The rotary positioning mechanism includes a rotatable support and a rotary positioning mechanism base. The rotatable support is rotatable relative to the base about a support rotational reference axis 32 that is parallel to the first and second rotational references axes 20 and 22 of the first and second rotary machine axes 10 and 16. The position of the rotatable support relative to its base may be selectively fixed, clamped or locked using a locking mechanism (not shown in the drawing).

The drive spindle 6 is mounted on the rotatable support of the rotary positioning mechanism 30.

In the configuration shown in Figure 2, it can be seen that the drive spindle 6 has been rotated relative to the linear machine axis using the rotary positioning mechanism 30 so that the spindle reference axis 34 is perpendicular to the linear drive reference axis 18. A workpiece 2' having a hemispherical surface is mounted in the chuck 4 of the drive spindle 6. The surface of the workpiece is machined by controlling motion of the two rotary and one linear machine axes so that the grinding wheel is able to machine the spherical surface of the workpiece whilst it is rotated by the drive spindle 6. The tool can be controlled so that, at the point of contact between the tool (the grinding wheel 12 in this example) and the workpiece, the tool (in this case, the plane of the grinding wheel) is normal to the workpiece surface as it moves round the spherical surface.

In Figure 2, the support rotational reference axis 32 is spaced from the first rotary reference axis 20. The rotary positioning mechanism may provide an indexing mechanism to change the orientation of the workpiece drive spindle 65 with respect to the linear machine axis 8 between two or more predefined positions.

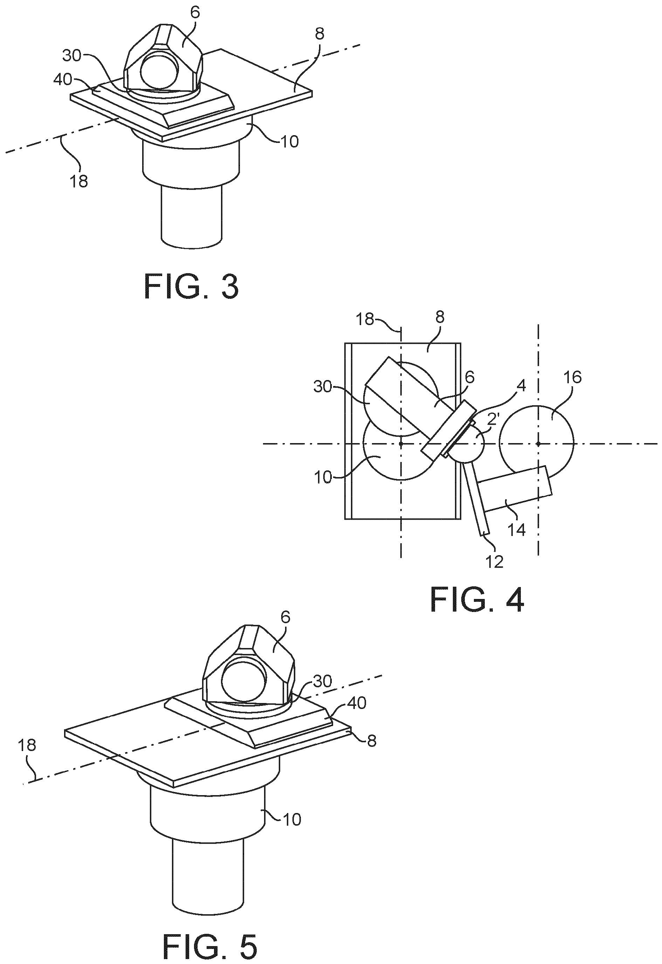

Figure 3 shows a rotary machine axis assembly of a machine tool according to an example of the present disclosure. In addition to a rotary positioning mechanism 30, a linear positioning mechanism 40 is included. The linear positioning mechanism is carried by the linear machine axis 8 and the linear positioning mechanism in turn carries the rotary positioning mechanism 30. The linear positioning mechanism includes a slideable support and a linear positioning mechanism base. The slideable support is slideable relative to the linear positioning mechanism base along a linear slide reference axis that is parallel to the linear drive reference axis 18. Addition of the linear positioning mechanism further extends the workzone of the machine tool. It allows the slideable support to be translated between two or more indexed locations along reference axis 18. The slideable support may be fixed, clamped or locked in a selected position relative to its base using a locking mechanism (not shown in the drawing).

In the machine configurations shown in Figures 4 and 5, the linear positioning mechanism has been used to displace the drive spindle 6 in the direction of reference axis 18. Relative to Figure 1, the drive spindle has been rotated relative to the linear machine axis using the rotary positioning mechanism through an angle of more than 90° to facilitate the desired access to the surface to be machined by the grinding wheel 12.

Positional control of a rotary positioning mechanism and/or a linear positioning mechanism as described herein can be achieved by a control arrangement of a machine tool with reference to calibration methods or by direct measurement using additional position transducers or encoders.

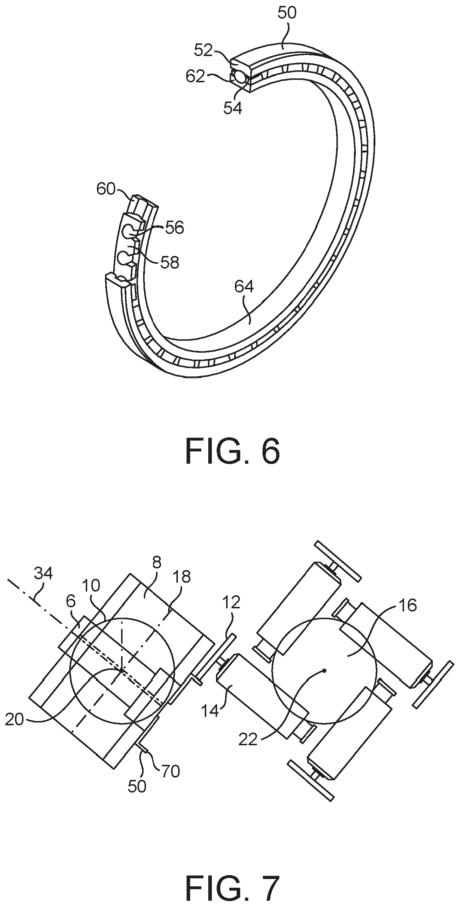

Figure 6 shows a thin ring bearing which is an example of a workpiece having surfaces which may be machined using a machine tool according to examples described herein. The outer diameter 50 of the outer race needs to be machined to precisely fit to the inside diameter of a supporting assembly. The inner diameter 54 of the outer race is machined to be concentric to the outer diameter 50 and profiled to provide a track for the bearings 56 held in a bearing cage 58. The outer diameter 60 of the inner race 62 is similarly profiled to provide a track for the bearings. The inner diameter 64 of the inner race should be machined to precisely fit the shaft of a supporting assembly.

Known bearing grinding machines use multiple stacked machine axes which include linear machine axes mounted on the machine base to provide the desired machine axis motion. However, such a configuration is detrimental to the overall machining loop stiffness, resulting in both extended machining cycle times and poor surface integrity or finish. The accuracy of the machine surface is further reduced by the point of contact of the tool with the workpiece being subject to offset errors caused by the need to stack linear axes. Using examples of machine tools as described herein, which include first and second rotary machine axes mounted on a machine base in non-adjustable locations relative to the base, and a single short stroke linear positioning machine axis, bearing races may be ground whilst avoiding drawbacks of existing bearing grinding machines. The required relative motions can be achieved whilst minimising the number of axes of motion and utilising the high loop stiffness associated with the two rotary and one linear machine axis configurations.

In the examples illustrated in Figures 7 to 10, the workpiece is a bearing raceway 70 by way of example. The raceway is mounted on the drive spindle 6 with its central axis coaxial with the spindle reference axis 34. The spindle reference axis is perpendicular to the linear drive reference axis 18. The second rotary machine axis 16 carries four tool spindles 14 at equally spaced locations around its reference axis 22. A grinding wheel 12 is in contact with an outer diameter 50 of the bearing raceway 70.

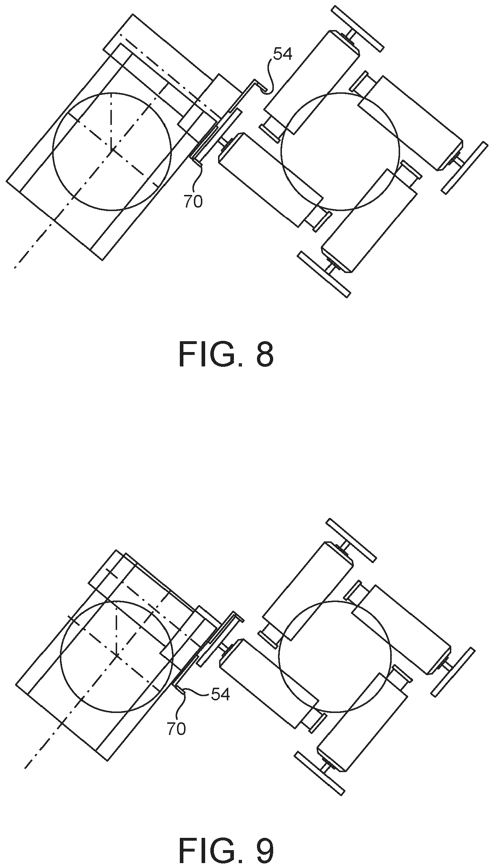

The outer diameter 50 of the raceway 70 is fed into the grinding wheel using the linear machine axis whilst holding the first and second rotary machine axes 10, 16 stationary. Figure 8 shows displacement of the drive spindle 6 relative to the linear machine axis 8 by a linear positioning mechanism (not shown) carried by the linear machine axis. The machine axes are operable to move the grinding wheel out of contact with the outer diameter of the bearing raceway 70 and into contact with its inner diameter 54 as shown in Figure 8. The inner diameter may be plunge ground by feeding the inner diameter towards the grinding wheel using the linear machine axis.

Figure 9 shows an alternative configuration in which the inner diameter 54 of the raceway 70 is ground using a smaller displacement of the drive spindle from the position shown in Figure 7. It may be preferable to reverse the direction of rotation of the workpiece and/or the tool spindle to optimise consistency of grinding forces and location of the workpiece.

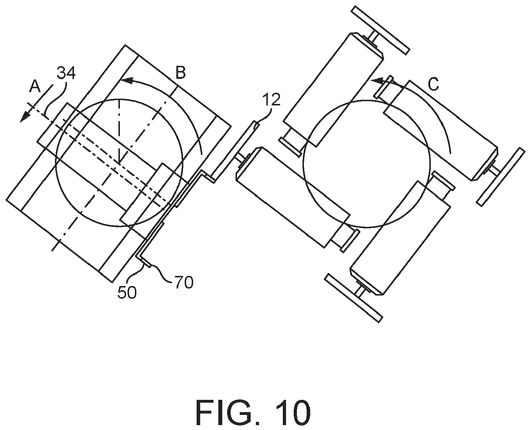

Figure 10 illustrates how a grinding wheel 12 can be translated across the surface of a workpiece 70 in a direction parallel to the spindle reference axis 34 using the two rotary and one linear machine axes simultaneously. Combining motion of the linear machine axis in direction A with rotation of the rotary machine axes in the respective directions B and C allows the grinding wheel to be translated across the outer diameter 50 of the bearing raceway 70.

Whilst the examples described with reference to the drawings are grinding machines, it will be appreciated that a broad range of machine operations may be implemented in accordance with the present disclosure. In addition to grinding operations, other applications are turning or polishing for example, and inspection of machine components.

It will be appreciated that references herein to perpendicular or parallel relative orientations and the like may be interpreted as defining orthogonal or parallel relationships between components within practical tolerances.

The term "machine axis" denotes a driven physical machine axis, as opposed to a reference axis. Each machine axis has two portions which are machine-driven relative to each other, about or along a reference axis. A machine axis may be servo-driven under the control of a control arrangement of the machine tool and may include guideways using hydrostatic or rolling element bearings. In preferred implementations of examples described herein, the machine axes or rotary or linear positioning mechanisms referred to may provide the only degrees of freedom of the machine tools.

## Claims

1. A machine tool comprising:
a machine base having a machine reference plane;
first and second rotary machine axes which are mounted on the base in non-adjustable locations relative to the base, and have respective first and second rotational reference axes that are parallel, spaced apart and perpendicular to the machine reference plane;
a linear machine axis which is carried by the first rotary machine axis, wherein the linear machine axis has a linear drive reference axis that is parallel to the machine reference plane; and
a linear positioning mechanism which is carried by the linear machine axis and includes a slideable support and a linear positioning mechanism base, wherein the slideable support is slideable relative to the linear positioning mechanism base along a linear slide reference axis that is parallel to the linear drive reference axis.

2. A machine tool comprising:
a machine base having a machine reference plane;
first and second rotary machine axes which are mounted on the base in non-adjustable locations relative to the base, and have respective first and second rotational reference axes that are parallel, spaced apart and perpendicular to the machine reference plane;
a linear machine axis which is carried by the first rotary machine axis, wherein the linear machine axis has a linear drive reference axis that is parallel to the machine reference plane; and
a rotary positioning mechanism which is carried by the linear machine axis and includes a rotatable support and a rotary positioning mechanism base, wherein the rotatable support is rotatable relative to the rotary positioning mechanism base about a support rotational reference axis that is parallel to the first and second rotational reference axes.

3. A machine tool of claim 2 including a linear positioning mechanism which is carried by the linear machine axis and includes a slideable support and a linear positioning mechanism base, wherein the slideable support is slideable relative to the linear positioning mechanism base along a linear slide reference axis that is parallel to the linear drive reference axis, and
wherein the rotary positioning mechanism is carried by the slideable support.

4. A machine tool of claim 2 or claim 3 including a drive spindle which is carried by the rotatable support, has a mount for receiving a tool or a workpiece and is operable to rotate the mount about a spindle reference axis which is parallel to the machine reference plane and non-parallel to the linear drive reference axis.

5. A machine tool of claim 4, wherein the spindle reference axis is perpendicular to the linear drive reference axis.

6. A machine tool of any preceding claim, wherein the rotatable support is manually rotatable relative to the rotary positioning mechanism base and includes a locking mechanism for selectively locking the position of the rotatable support relative to the rotary positioning mechanism base.

7. A machine tool of any preceding claim, wherein the rotary positioning mechanism includes a rotary drive for rotating the rotatable support relative to the rotary positioning mechanism base.

8. A machine tool of claim 1 or claim 3, or any of claims 4 to 7 when dependent on claim 3, wherein the slideable support is manually slideable relative to the linear positioning mechanism base and includes a locking mechanism for selectively locking the position of the slideable support relative to the linear positioning mechanism base.

9. A machine tool of any of claims 1, 3 and 8, or any of claims 4 to 7 when dependent on claim 3, wherein the linear positioning mechanism includes a linear drive for moving the slideable support relative to the linear positioning mechanism base.

10. A method of machining a workpiece with a machine tool of any preceding claim, comprising the steps of:
mounting a workpiece on a workpiece mount carried by the rotatable support or the slideable support;
mounting a tool on a tool mount carried by the second rotary machine axis;
bringing the workpiece and tool into contact; and
machining the workpiece by feeding the workpiece towards the tool using only the linear machine axis.

11. A method of claim 10, wherein the machining step includes rotating the workpiece about a spindle reference axis which is parallel to the machine reference plane and non-parallel to the linear drive reference axis.

12. A method of claim 11, wherein the spindle reference axis is perpendicular to the linear drive reference axis.

13. A method of machining a workpiece with a machine tool of any of claims 1 to 9, comprising the steps of:
mounting a workpiece on a workpiece mount carried by the rotatable support or the slideable support;
mounting a tool on a tool mount carried by the second rotary machine axis;
bringing the workpiece and tool into contact; and
machining the workpiece by moving the workpiece relative to the tool using only the linear machine axis and the first and second rotary machine axes.

14. A method of claim 13, wherein the tool is moved relative to the workpiece in a direction perpendicular to the linear drive reference axis.
